# EUROPÄISCHE PATENTSCHRIFT

(11) **EP 0 485 710 B1**
(45) Veröffentlichungstag und Bekanntmachung des Hinweises auf die Patenterteilung: **06.12.1995**
(21) Anmeldenummer: 91115611.5
(22) Anmeldetag: 14.09.1991
(51) Int. Cl.: H04B 1/56

(54) **Funkgerät für ein FDM-TDM-Funkübertragungssystem**
Radiotransceiver for FDM-TDM transmission system
Emetteur-récepteur radio pour système de transmission à multiplexage par répartition fréquentielle et temporelle

(30) Priorität: 15.11.1990 DE 4036418
(43) Veröffentlichungstag der Anmeldung: 20.05.1992
(73) Patentinhaber: Grundig E.M.V. Elektro-Mechanische Versuchsanstalt Max Grundig GmbH & Co. KG, 90762 Fürth (DE)
(72) Erfinder: Bauerschmidt, Werner, Grundig E.M.V., Max Grundig, D-8510 Fuerth (DE)

(56) Entgegenhaltungen:
- EP-A- 0 292 996
- DE-C- 872 081
- GB-A- 1 596 302
- US-A- 2 447 392

## Beschreibung

Die Erfindung betrifft ein Funkgerät für ein FDM-TDM-Funkübertragungssystem gemäß dem Oberbegriff des Patentanspruchs 1.

Funkgeräte mit N-fach-Superhet-Empfänger, d.h. Empfänger mit n-facher Frequenzumsetzung, sind seit langem bekannt. Beispielsweise ist in der EP-B1-0 089 649 ein Funkgerät mit einem Einfach-Superhet-Empfänger beschrieben, bei dem die hochfrequente Trägerschwingung (d.h. der Modulationsträger) des Sendeoszillators (Local Oscillator) jeweils zwischen den Empfangsfrequenzen (Modulationsträgern) von zwei benachbarten Funkkanälen liegt und einem Mischer zugeführt wird. Durch die doppelte Ausnutzung des vom Local Oscillator erzeugten Modulationsträgers kann nicht nur im Empfänger ein Oszillator entfallen, sondern zusätzlich können Interferenz-Schwingungen, welche sonst in einem Gerät mit mehreren Oszillatoren auftreten würden, vermieden werden.

Ein solches Schaltungskonzept ist jedoch mit dem Nachteil verbunden, daß das Zwischenfrequenzsignal neben der Modulation des empfangenen Signals auch vom Sender stammende Modulationssignalkomponenten enthält.

Um das Empfangssignal, z.B. ein Sprachsignal, ohne Störungen, insbesondere ohne Übersprechstörung am Funkgerät wiedergeben zu können, müssen die von der Sendeeinrichtung des Funkgeräts kommenden Modulationssignalkomponenten in dessen Empfangseinrichtung möglichst gut beseitigt bzw. unterdrückt werden.

In der Praxis haben sich zwei verschiedene Verfahren bewährt. Bei dem ersten Verfahren erfolgt die Subtraktion des dem Sendemodulator zuführten Eingangssignals vom Ausgangssignal des Demodulators in der Niederfrequenzebene (Basisband) und beim zweiten Verfahren wird eine Modulation des Empfangsmischers (Umsetzung von der ersten in die zweite Zwischenfrequenzlage) mit einem zur Modulation des Local Oscillators gegenphasigen Signals vorgenommen.

Es sind auch Kombinationen der beiden vorstehend genannten Verfahren bekannt und beispielsweise in der DE-AS 1 002 805 ausführlich erläutert. Zum Kompensieren der durch das Modulationssignal verursachten Modulationskomponente sind beim Gegenstand der DE-AS 1 002 805 zwei Ausführungsformen einer Kompensiereinrichtung beschrieben, welche zwischen Sende- und Empfangseinrichtung angeordnet ist und jeweils einen Verstärker und einen Phasenschieber aufweist. Bei der dem ersten Verfahren entsprechenden ersten Ausführungsform wird eine rein modulationsfrequent wirksame Kompensation erzielt. Bei der zweiten Ausführungsform wird, entsprechend dem zweiten Verfahren, die Kompensation durch Mehrfachmodulation, d.h. durch einen zusätzlichen Modulationsvorgang, erreicht.

Um dem Wunsch des Fernsprechteilnehmers nach mobiler Kommunikation zu entsprechen, sind in den letzten Jahren nicht nur verstärkt die bekannten Mobilfunkdienste, die man grob in die Bereiche Funktelefondienst, Funkrufdienst und andere Mobilfunkdienste, z.B. Datenfunk oder Betriebsfunk, gliedern kann, weiter entwickelt worden. Auch durch den Einsatz sogenannter schnurloser Telefonapparate (cordless telephone) kann der Bewegungsbereich des Benutzers erweitert werden. Die Nachrichtenübertragung zwischen einer Basisstation und der zugehörigen Mobilstation des schnurlosen Telefonapparats erfolgt dabei über ein Funkkanalpaar, wobei hinsichtlich der Funkübertragungstechnik bei einem schnurlosen Telefonapparat in entsprechender Weise wie bei einem Funkgerät vorgegangen werden kann. Derzeit in der Bundesrepublik Deutschland zugelassene schnurlose Telefonapparate weisen eine Sendeleistung von bis zu 10 mW auf. Die mit CT1 bezeichneten schnurlosen Telefonapparate haben für die Nachrichtenübertragung 40 Funkkanäle (mit FDMA; Frequency Division Multiple Access) im um 900 MHz liegenden Frequenzband zur Verfügung. Die Bandbreite eines Funkkanals beträgt 25 kHz, wobei der Frequenzabstand der beiden für den Duplexbtrieb benötigten Funkkanäle 45 MHz beträgt. Neuere als CT1+ bezeichnete schnurlose Telefonapparate weisen im Frequenzband von 885 - 887 MHz (für die eine Übertragungsrichtung) und im Frequenzband von 930 - 932 MHz (für die andere Übertragungsrichtung) insgesamt 80 Funkkanäle zu je 2 x 25 kHz auf, so daß insgesamt 4 MHz verfügbare Frequenzbandbreite genutzt werden.

Neben dem vorstehend beschriebenen FDM-Funkübertragungssystem sind auch FDM-TDM-Funkübertragungssysteme bekannt, bei denen zur Nachrichtenübertragung die Kombination der beiden Multiplexverfahren Frequenzmultiplex und Zeitmultiplex benutzt wird. Ein Beispiel hierfür ist das zukünftige DECT (Digital European Cordless Telephone), bei dem voraussichtlich auf einem Träger zwölf Duplex-Kanäle mittels eines TDMA/TDD-Zugriffs (TDMA, Time Division Multiple Access; TDD, Time Division Duplex) zur Verfügung stehen. Die zwölf oder dreizehn Träger (Modulationsträger) sollen im Frequenzband von 1,88 bis 1,9 GHz liegen, wodurch insgesamt ca. 150 Funkkanäle mit einer Frequenzbandbreite von insgesamt ca. 20 MHz für die Nachrichtenübertragung genutzt werden können. Ausführungsformen der hierbei möglicherweise zum Einsatz kommenden Sende-/Empfangseinrichtung sind beispielsweise in der EP-A2-0 292 996 oder in der EP-A2-0 333 419 beschrieben.

Beim Gegenstand des aus der EP-A2-0 292 996 bekannten Funkgeräts ist ein Hauptoszillator (local oscillator) vorgesehen, welcher sowohl mit dem Sendemischer als auch mit dem ersten Empfangsmischer verbunden ist. In der Sendeeinrichtung erfolgt dadurch die Umsetzung des Sendesignals in die Sendefrequenzlage, während im ersten Empfangsmischer die Umsetzung des Empfangssignals in die Zwischenfrequenzlage vorgenommen wird. Dadurch sind Sende- und Empfangsfrequenz der beiden für den Duplexbetrieb benötigten Funkkanäle gleich, wobei die Trennung der Übertragungsrichtungen unter Benutzung des Zeitmultiplexverfahrens erreicht wird. Hierzu ist jeweils in Sendeeinrichtung und Empfangseinrichtung ein Bitraten-Wandler zur Erhöhung bzw. Verminderung der Bitrate des Sende- und Empfangssignals angeordnet.

Bei einer Sende-Empfängerschaltung, bei der Sende- und Empfangsfrequenz gleich sind, ist ständig schnell zwischen Sende- und Empfangsbetrieb umzuschalten. Hierzu sind beim Funkgerät der EP-A2-0 292 996 zwei Ausführungsformen einer Schalteinrichtung zur Umschaltung zwischen Sende- und Empfangsbetrieb beschrieben. Bei der ersten Ausführungsform ist zwischen Sende- und Empfangsverstärker ein Umschalter angeordnet, während bei der zweiten Ausführungsform zusätzlich zwischen Sendemischer und Sendeverstärker ein Schalter angeordnet ist. Bei der aus der EP-A2-0 333 419 bekannten Ausführungsform einer Sende- und Empfangseinrichtung erfolgt die Abschaltung des Senders im Empfangsbetrieb durch Außerbetriebnahme des Sendeverstärkers.

Wie praktische Untersuchungen eines solchen Konzepts für die Umschaltung zwischen Sende- und Empfangsbetrieb ergeben haben, treten dennoch im Empfangsbetrieb Restsignale des Senders auf, welche ein Empfangssignal vortäuschen. Eine vollständige Abschaltung der Sendefrequenzaufbereitung ist nicht möglich, da das Wiedereinschalten bis zum Erreichen einer hohen Frequenzgenauigkeit zu lange dauern würde.

Weiterhin ist aus der US-A-2 447 392 ein Funkgerät mit einer Sendeeinrichtung bekannt, deren Sendemischer zur Umsetzung des Sendesignals in die Sendefrequenzlage mit einem Hauptoszillator verbunden ist, wobei die Sende- und Empfangsfrequenzlage gleich sind. In einer Superhet-Empfangseinrichtung ist deren erster Empfangsmischer zur Umsetzung des Empfangssignals in die Zwischenfrequenzlage mit dem Hauptoszillator verbunden. Weiterhin ist eine Schalteinrichtung zur Umschaltung zwischen Sende- und Empfangsbetrieb sowie ein erster Hilfsoszillator vorgesehen, welcher mit dem Sendemischer verbunden ist, wobei im Empfangsbetrieb der Übertragungsweg zwischen Sendemischer und Hauptoszillator durch die Schalteinrichtung unterbrochen ist.

Das Abschalten des Hauptoszillators vom Sendemischer hat auch beim Funkgerät nach der US-A-2 447 392 die Aufgabe, Störungen des Sendeträgers beim Empfang wirksam zu verhindern.

Der Erfindung liegt die Aufgabe zugrunde, ein gattungsgemäßes Funkgerät derart auszugestalten, daß das Empfangssignal nicht mehr von der Sendeeinrichtung stammende Modulationssignalkomponenten enthält.

Diese Aufgabe wird bei einem gattungsgemäßen Funkgerät durch die Merkmale des kennzeichnenden Teils des Patentanspruchs 1 gelöst.

Das erfindungsgemäße Funkgerät weist den Vorteil auf, daß es nicht erforderlich ist, frequenzbestimmende Bauelemente der Schaltung ein-, aus- oder umzuschalten, wodurch ein sehr schneller Wechsel zwischen Sende- und Empfangsbetrieb möglich ist, ohne daß im Empfangszustand Reste des Sendesignals stören können. Weiterhin ist von Vorteil, daß ein breiter Anwendungsbereich für in im Duplexbetrieb arbeitende Geräte, z.B. beim Autotelefon, Betriebsfunk, schnurloses Telefon gegeben ist. Schließlich ist von Vorteil, daß die Frequenz des ersten Hilfsoszillators ungleich der Zwischenfrequenz gewählt werden kann, so daß mögliche Störungen des Empfangsbetriebes vor allen Dingen bei räumlich beengten Aufbauten zuverlässig vermieden werden können.

Wird gemäß der Ausführungsform nach Patentanspruch 2 anstelle von erstem und zweitem Hilfsoszillator ein einziger Hilfsoszillator benutzt, so kann der Schaltungsaufwand zur Erzeugung der Zwischenfrequenz verringert werden.

Die Ausführungsform des Funkgeräts gemäß Patentanspruch 3 weist den Vorteil auf, daß auftretende Laufzeitschwankungen, welche entsprechende Korrekturen des Beginns von Empfangs- und Senderahmen bedingen, auf einfache Art und Weise korrigiert werden können und daß die Signalaufbereitung, d.h. die Zusammenstellung von Senderahmen und Einfügung zusätzlicher Bits, auf einfache Art und Weise durchgeführt werden kann.

Weist das Funkgerät gemäß Patentanspruch 5 einen Sprachdetektor auf, so kann durch das Ausschalten des Senders eine Stromersparnis bewirkt werden. Das Abschalten des Senders kann auch während der Sprechpausen vorgenommen werden, wie dies an sich aus der DE-PS 24 15 332 bekannt ist. Durch die Verzögerung der Sprache im elastischen Speicher wird zudem verhindert, daß die erste Silbe oder sogar das erste gesprochene Wort der den Umschaltvorgang auslösenden Sprache verloren geht.

Die Erfindung wird im folgenden anhand in der Zeichnung dargestellter Ausführungsformen näher beschrieben und erläutert. Es zeigen:
- Fig. 1: eine erste Ausführungsform und
- Fig. 2: eine zweite Ausführungsform des erfindungsgemäßen Funkgeräts.

Für das erfindungsgemäße Funkgerät ist ein breiter Anwendungsbereich, insbesondere bei im Duplexbetrieb arbeitenden Geräten der Nachrichtentechnik gegeben. Die verschiedenen Ausführungsformen sind nicht an ein spezielles Übertragungsverfahren (Modulations- und Codierverfahren) gebunden. Im Folgenden wird von der Anwendung in einem schnurlosen Telefon ausgegangen.

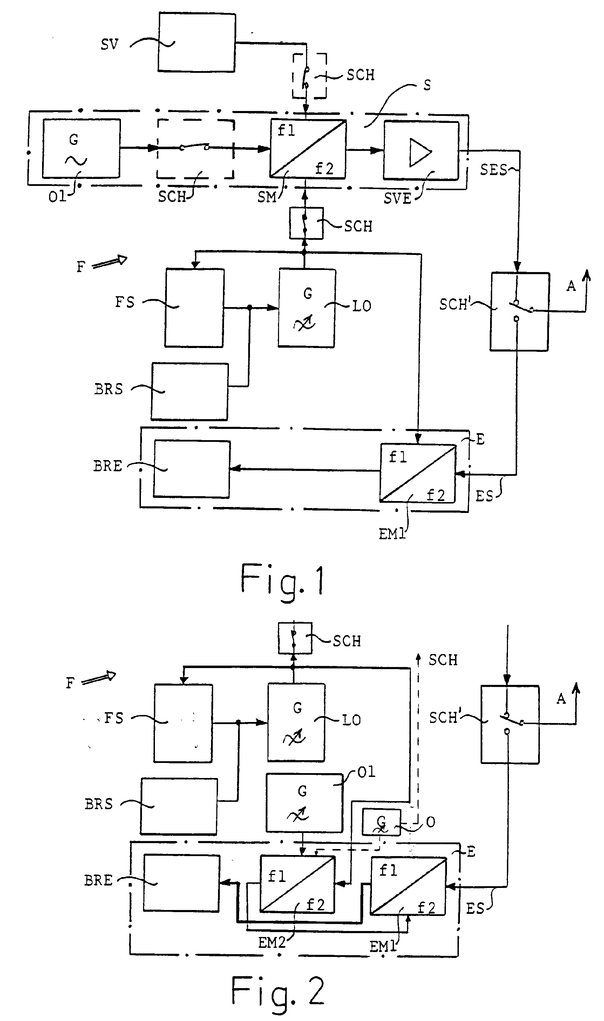

Fig. 1 zeigt das Blockschaltbild einer ersten Ausführungsform des erfindungsgemäßen Funkgeräts. Die Nachrichtenübertragung zwischen einem Basisteil und dem zugehörigen Mobilteil (Funkgerät) F des schnurlosen Telefonapparates erfolgt über ein Funkübertragungskanalpaar. Das Basisteil kann an die Hauptanschlußleitung (Amtsleitung) des drahtgebundenen Fernmeldenetzes angeschlossen werden, so daß für den Benutzer des Mobilteils F der Zugang zum öffentlichen Fernsprechnetz ermöglicht wird.

Das Mobilteil F enthält u.a. eine Sendeeinrichtung S, deren Sendemischer SM mit einem Hauptoszillator LO zur Umsetzung des Sendesignals SES in die Sendefrequenzlage verbunden ist. Weiterhin ist eine N-Fach-Superhet-Empfangseinrichtung E vorgesehen, deren erster Empfangsmischer EM1 zur Umsetzung des Empfangssignals ES in die Zwischenfrequenzlage mit dem Hauptoszillator LO verbunden ist. Die Sende- und Empfangsfrequenz der beiden für Duplexbetrieb benötigten Funkkanäle sind gleich. Um einen Duplexbetrieb über ein einziges Funkkanalpaar zu ermöglichen, sind (vgl. EP-A2-0292996) in Sendeeinrichtung S und Empfangseinrichtung E jeweils ein Bitraten-Wandler BRS, BRE zur Erhöhung bzw. Verminderung der Bitrate des Sende- und Empfangssignals SES, ES und eine Schalteinrichtung SCH′ zur Umschaltung zwischen Sende- und Empfangsbetrieb angeordnet. Die Schalteinrichtung SCH′ ist einerseits mit einer Sende- und Empfangsantenne A (vgl. EP-A2-0292996), andererseits mit einem Sendeverstärker SVE verbunden.

Erfindungsgemäß weist die Sendeeinrichtung S einen ersten Hilfsoszillator O1 auf, welcher mit dem Sendemischer SM verbunden ist und im Empfangsbetrieb wird von der Schalteinrichtung SCH der Übertragungsweg beispielsweise zwischen Sendemischer SM und Hauptoszillator LO unterbrochen. Der Hauptoszillator LO kann z.B. mit Hilfe eines Frequenzsynthesizers FS stabilisiert und auf verschiedene Frequenzen umgeschaltet werden. Der Hauptoszillator LO ist im Sendebetrieb modulierbar. Das Abschalten des Trägers (Sendefrequenz) kann auch dadurch erreicht werden, daß durch die Schalteinrichtung SCH der Übertragungsweg zwischen Sendemischer SM und erstem Hilfsoszillator O1 unterbrochen oder die Betriebsspannung für den Sendemischer SM abgeschaltet wird.

Für den Empfangsbetrieb wird der Ausgang des Hauptoszillators LO mit dem erstem Empfangsmischer EM1 verbunden, wodurch das Empfangssignal ES in die Zwischenfrequenzlage umgesetzt wird. Wird für diese Ummischung direkt der Träger vom Hauptoszillator LO verwendet, so ist die erzeugte Zwischenfrequenz gleich der Frequenz vom ersten Hilfsoszillator O1. Dies kann bei räumlich beengten Aufbauten zu Störungen des Empfangsbetrieb führen.

Bei der in Fig. 2 dargestellten zweiten Ausführungsform wird dies dadurch verhindert, daß zwischen Hauptoszillator LO und erstem Empfangsmischer EM1 ein zweiter Empfangsmischer EM2 angeordnet ist, an dessem zweiten Eingang das Ausgangssignal eines zweiten Hilfsoszillators O2 anliegt. Zur Frequenzumsetzung im ersten Empfangsmischer EM1 wird die Summe oder die Differenz zwischen der Frequenz vom Hauptoszillator LO und zweitem Hilfsoszillator O2 benutzt.

Weiterhin ist es auch möglich (in Fig. 2, strichliniert dargestellt) einen einzigen Hilfsoszillator O zu benutzen, wobei zur Frequenzumsetzung im Sendemischer SM und ersten Empfangsmischer EM1 entweder die Summe oder die Differenz der Frequenz vom Hauptoszillator LO und Hilfsoszillator O zu benutzen sind. In diesem Fall kann im Empfangsbetrieb - durch die Schalteinrichtung SCH - der Übertragungsweg zwischen Hilfsoszillator O und Sendemischer SM unterbrochen werden.

## Patentansprüche

1. Funkgerät für ein FDM-TDM-Funkübertragungssystem mit einer Sendeeinrichtung (S), deren Sendemischer (SM) mit einem Hauptoszillator (LO) zur Umsetzung des Sendesignals (SES) in die Sendefrequenzlage verbunden ist, wobei Sende- und Empfangsfrequenz der beiden für Duplexbetrieb benötigten Funkkanäle gleich sind, mit einer N-fach-Superhet-Empfangseinrichtung (E), deren erster Empfangsmischer (EM1) zur Umsetzung des Empfangssignals (ES) in die Zwischenfrequenzlage mit dem Hauptoszillator (LO) verbunden ist, mit einem jeweils in Sendeeinrichtung (S) und Empfangseinrichtung (E) angeordneten Bitraten-Wandler (BRS, BRE) zur Erhöhung bzw. Verminderung der Bitrate des Sende- und Empfangssignals (SES, ES) und mit einer Schalteinrichtung (SCH) zur Umschaltung zwischen Sende-und Empfangsbetrieb, wobei in der Sendeeinrichtung (S) ein erster Hilfsoszillator (O1) angeordnet ist, welcher mit dem Sendemischer (SM) verbunden ist,
**dadurch gekennzeichnet**,
daß im Empfangsbetrieb der Übertragungsweg zwischen Sendemischer (SM) und Hauptoszillator (LO) oder erstem Hilfsoszillator (O1) oder Stromversorgungseinrichtung (SV) durch die Schalteinrichtung (SCH) unterbrochen wird, daß zwischen Hauptoszillator (LO) und erstem Empfangsmischer (EM1) ein zweiter Empfangsmischer (EM2) angeordnet ist, an dessem zweiten Eingang das Ausgangssignal eines zweiten Hilfsoszillators (O2) anliegt und daß zur Frequenzumsetzung im ersten Empfangsmischer (EM1) die Summe oder die Differenz der Frequenz vom Hauptoszillator (LO) und zweitem Hilfsoszillator (O2) benutzt wird.

2. Funkgerät nach Anspruch 1, **dadurch gekennzeichnet**, daß anstelle von erstem und zweitem Hilfsoszillator (O1, O2) ein einziger Hilfsoszillator (O) benutzt wird, wobei zur Frequenzumsetzung im Sendemischer (SM) und ersten Empfangsmischer (EM1) entweder die Summe oder die Differenz der Frequenz vom Hauptoszillator (LO) und Hilfsoszillator (O) benutzt wird.

3. Funkgerät nach Anspruch 1, **dadurch gekennzeichnet**, daß als Bitraten-Wandler (BRS, BRE) ein elastischer Speicher benutzt wird.

4. Funkgerät nach Anspruch 3, **dadurch gekennzeichnet,** daß das Funkgerät einen Sprachdetektor (SD) enthält, welcher mit dem im Sender (S) angeordneten Bitraten-Wandler (BRS) verbunden ist, wodurch auch eine Verzögerung entsprechend der für die Detektion benötigten Zeit erreicht wird, und daß am Ausgang des Sprachdetektors (SD) ein Steuersignal (SI) zur Abschaltung der für den Empfangsbetrieb nicht benötigten Baugruppen abgreifbar ist.

## Claims

1. A radio device for a FDM-TDM radio transmission system with a transmitting device (S), the transmitting mixer (SM) of which is connected to a main oscillator (LO) for the conversion of the transmitted signal (SES) into the transmitting frequency position, where the transmitting and receiving frequencies of the two radio channels required for duplex operation are identical, with a N-fold superhet receiving device (E), the first receiving mixer (EM1) of which is connected to the main oscillator (LO) for the conversion of the received signal (ES) into the intermediate frequency position, with a bit rate converter (BRS, BRE), in each case arranged in the transmitting device (S) and the receiving device (E), for increasing or reducing the bit rate of the transmitted and received signals (SES, ES) and with a switching device (SCH) for switching over between transmitting and receiving operation, where a first auxiliary oscillator (O1), which is connected to the transmitting mixer (SM), is arranged in the transmitting device (S), characterised in that in receiving operation the transmission path between the transmitting mixer (SM) and the main oscillator (LO) or the first auxiliary oscillator (O1) or the current supply device (SV) is interrupted by the switching device (SCH), that between the main oscillator (LO) and the first receiving mixer (EM1) a second receiving mixer (EM2) is arranged, to the second input of which the output signal of a second auxiliary oscillator (O2) is applied, and that the sum or difference of the frequency of the main oscillator (LO) and the second auxiliary oscillator (O2) is used for the frequency conversion in the first receiving mixer (EM1).

2. A radio device as claimed in Claim 1, characterised in that in place of the first and second auxiliary oscillator (O1, O2) one single auxiliary oscillator (O) is used, where either the sum or the difference of the frequency of the main oscillator (LO) and the auxiliary oscillator (O) is used for the frequency conversion in the transmitting mixer (SM) and the first receiving mixer (EM1).

3. A radio device as claimed in Claim 1, characterised in that an elastic memory is used as bit rate converter (BRS, BRE).

4. A radio device as claimed in Claim 3, characterised in that the radio device comprises a speech detector (SD) which is connected to the bit rate converter (BRS) arranged in the transmitter (S), whereby a delay corresponding to the time required for the detection is also obtained, and that a control signal (S1) for the switching off of those assemblies not required for the receiving operation can be tapped from the output of the speech detector (SD).

## Revendications

1. Appareil radio pour un système de transmission FDM-TDM (c'est-à-dire à multiplexage par répartition de fréquence et à multiplexage par répartition dans le temps) comportant un dispositif émetteur (S), dont le mélangeur d'émission (SM) est relié à un oscillateur principal (LO) pour amener par conversion le signal d'émission (SES) dans la position de fréquence d'émission, la fréquence d'émission et la fréquence de réception des deux canaux hertziens nécessaires pour le fonctionnement en duplex étant égales, et comportant un dispositif de réception super-hétérodyne avec le facteur N (E), dont un premier mélangeur de réception (EM1) est relié à l'oscillateur principal (LO) pour amener par conversion le signal de réception (ES) dans la position de fréquence intermédiaire, un transformateur de cadence binaire (BRS,BRE) disposé respectivement dans le dispositif émetteur (S) et dans le dispositif récepteur (E) pour accroître ou réduire la cadence binaire du signal d'émission et du signal de réception (SES, ES), et un dispositif de commutation (SCH) pour réaliser la commutation entre un fonctionnement d'émission et un fonctionnement de réception, un premier oscillateur auxiliaire (O1), qui est relié à l'émetteur d'émission (SM), étant disposé dans le dispositif d'émission (S),
caractérisé en ce
que dans le fonctionnement de réception, la voie de transmission entre le mélangeur d'émission (SM) et l'oscillateur principal (LO) ou le premier oscillateur auxiliaire (O1) ou le dispositif d'alimentation en courant (SV) est interrompue par le dispositif de commutation (SCH), qu'entre l'oscillateur principal (LO) et le premier mélangeur de réception (EM1) est disposé un second mélangeur de réception (EM2), à la seconde entrée duquel est présent le signal de sortie d'un second oscillateur auxiliaire (O2) et que la somme ou la différence des fréquences de l'oscillateur principal (LO) et du second oscillateur auxiliaire (O2) est utilisée pour la conversion de fréquence dans le premier mélangeur de réception (EM1).

2. Appareil radio selon la revendication 1, caractérisé en ce qu'à la place des premier et second oscillateurs auxiliaires (O1, O2), on utilise un seul oscillateur auxiliaire (O), auquel cas soit la somme, soit la différence des fréquences de l'oscillateur principal (LO) et de l'oscillateur auxiliaire (OS) est utilisée pour la conversion de fréquence dans le mélangeur d'émission (SM) et dans le premier mélangeur de réception (EM1).

3. Appareil radio suivant la revendication 1, caractérisé par le fait qu'on utilise comme transformateur de cadence binaire (BRS, BRE) une mémoire élastique.

4. Appareil radio suivant la revendication 3, caractérisé en ce que l'appareil radio contient un détecteur de signaux vocaux (SD), qui est relié au transformateur de cadence binaire (BRS) disposé dans l'émetteur (S), ce qui a pour effet que l'on obtient également un retard correspondant au temps nécessaire pour la détection et qu'un signal de commande (SI) pour le débranchement des modules non nécessaires pour le fonctionnement de réception, peut être prélevé à la sortie du détecteur de signaux vocaux (SD).
